# EUROPEAN PATENT APPLICATION

(11) **EP 4 468 687 A1**
(43) Date of publication of application: **27.11.2024**
(21) Application number: 22925627.6
(22) Date of filing: 08.09.2022
(51) Int. Cl.: H04L 67/63

(54) **SERVICE DISTRIBUTION METHOD, APPARATUS AND SYSTEM**

(30) Priority: 14.02.2022 CN 202210132528; 13.06.2022 CN 202210667595
(71) Applicant: Huawei Cloud Computing Technologies Co., Ltd., Gui'an New District, Guizhou 550025 (CN)
(72) Inventor: WANG, Nannan, Guizhou 550025 (CN); XU, Yang, Guizhou 550025 (CN); WANG, Feng, Guizhou 550025 (CN); YANG, Changpeng, Guizhou 550025 (CN); WANG, Jun, Guizhou 550025 (CN)
(74) Representative: Epping - Hermann - Fischer
(86) International application number: PCT/CN2022/117936
(87) International publication number: WO 2023/151268

(57) **Abstract**

A service steering method, an apparatus, and a system are provided. The system includes a cloud management platform node, a plurality of resource pools, and a steering node. Each resource pool includes a plurality of hosts configured to run services for a plurality of tenants, and at least one instance is run on each host. An instance cluster corresponding to a target service of a target tenant is created in each resource pool, and an instance in the instance cluster is used to run the target service. In the method, the cloud management platform node obtains available resource information of each resource pool associated with the target service, where the available resource information of each resource pool indicates a quantity of instances that are of an instance cluster and that can be provided for the target service from the resource pool in a time period. The cloud management platform node generates, based on the available resource information of each resource pool, a steering plan of the target service in the time period. The steering node allocates service traffic of the target service in the time period to the plurality of resource pools according to the steering plan.

## Description

### CROSS REFERENCE TO RELATED APPLICATIONS

This application claims priority to Chinese Patent Application No. 202210132528.9, filed with the China National Intellectual Property Administration on February 14, 2022 and entitled "DATA PROCESSING METHOD AND COMPUTER", which is incorporated herein by reference in its entirety. This application claims priority to Chinese Patent Application No. 202210667595.0, filed with the China National Intellectual Property Administration on June 13, 2022 and entitled "SERVICE STEERING METHOD, APPARATUS, AND SYSTEM", which is incorporated herein by reference in its entirety.

### TECHNICAL FIELD

This application relates to the field of cloud computing technologies, and in particular, to a service steering method, an apparatus, and a system.

### BACKGROUND

Load balancing is a technology of distributing service traffic to available servers in an instance cluster based on a load balancing algorithm. Load balancing manages the service traffic entering the instance cluster to provide as good network experience as possible for network visitors.

Currently, a load balancing policy includes a load balancing algorithm, a preset steering ratio, and the like. The load balancing algorithm is mainly used to select an instance cluster for steering, for example, an instance cluster corresponding to a polling service, and allocate a service request to an instance cluster with a light load for processing; or select an instance cluster close to a location of user equipment that triggers a service request to respond to the service request. The preset steering ratio means that steering is performed based on a preset ratio of a plurality of instance clusters corresponding to a service.

However, when service traffic bursts, or when quantities of available resources of the plurality of instance clusters corresponding to the service are inconsistent, selecting an instance cluster with a minimum load or performing steering based on a preset traffic ratio can implement only coarse-grained steering. Consequently, a service request allocated to the instance cluster cannot be processed in a timely manner. The situation is aggravated in a traffic burst scenario and experience of a network visitor is degraded.

### SUMMARY

This application provides a service steering method, an apparatus, and a system, to implement fine-grained accurate steering, and ensure that a service request can be processed in a timely manner.

According to a first aspect, this application provides a service steering method. The method may be applied to a cloud computing system. The system includes a cloud management platform node, a plurality of resource pools, and a steering node. Each resource pool includes a plurality of hosts configured to run services for a plurality of tenants, and at least one instance is run on each host. An instance cluster corresponding to a target service of a target tenant may be created in each resource pool, and an instance in the instance cluster is configured to run the target service. The method includes: The cloud management platform node obtains available resource information of each resource pool associated with the target service, where the available resource information of each resource pool indicates a quantity of instances that can be provided for the target service from the resource pool in a time period (denoted as a target time period); the cloud management platform node generates, based on the available resource information of each resource pool, a steering plan of the target service in the target time period; and the steering node allocates, service traffic of the target service in the target time period to one or more resource pools according to the steering plan.

In the foregoing technical solution, the cloud management platform node determines, based on the available resource information of the resource pool associated with the target service, the steering plan of the target service in the target time period, to predetermine service traffic that is of the target service and that is allocated to each resource pool in different time periods. This helps better implement traffic allocation planning, avoid a case in which the service traffic allocated to the instance cluster exceeds a bearing capability of the resource pool to which the instance cluster belongs, ensure that the service requests allocated to the instance cluster can be processed in a timely manner as much as possible, implement fine-grained steering, and reduce or avoid large-scale service request congestion when service traffic bursts.

In a possible implementation, the available resource information of each resource pool indicates a quantity of idle instances in the resource pool in the target time period, and the idle instance is not occupied by another tenant in the resource pool in the target time period.

In the foregoing technical solution, in comparison with the load balancing policy, a load of the instance cluster is no longer focused on in this application, but the quantity of idle instances in the resource pool in the target time period is determined, and the cloud management platform node formulates the steering plan based on the quantity of idle instances. In this way, regardless of whether the quantities of available resources of the plurality of instance clusters corresponding to a service are the same, a finer-grained traffic distribution can be implemented compared with the load balancing policy.

In a possible implementation, the steering plan indicates a maximum value of service traffic that is of the target service and that can be carried in each resource pool in the target time period, or a ratio of the service traffic that is of the target service and that is allocated to all the resource pools in the time period.

In the foregoing technical solution, the cloud management platform node determines the steering plan based on the available resource information of each resource pool, and indicates the maximum value of the service traffic that is of the target service and that can be carried in each resource pool, to avoid a case in which the service traffic allocated to the instance cluster exceeds a maximum bearing capability of the resource pool to which the instance cluster belongs. When the steering plan indicates the traffic ratio, the steering plan may be compatible with the steering node that performs steering based on the preset traffic ratio in the foregoing load balancing policy. This improves applicability of the technical solutions in this application.

In a possible implementation, the steering plan indicates priority information of the service traffic that is of the target service and that is allocated to all the resource pools in the target time period.

In the foregoing technical solution, a sequence of allocating service traffic of the target service to the resource pools may be adjusted based on the priority information of the resource pools, so that a traffic allocation manner is more flexible.

In a possible implementation, the method further includes: The cloud management platform node obtains resource requirement information of the target service, where the resource requirement information indicates a predicted service traffic value of the target service in the target time period; and the cloud management platform node generates the steering plan based on the resource requirement information of the target service and the available resource information of each resource pool.

In the foregoing technical solution, the steering plan is generated based on the resource requirement information of the target service and the available resource information of each resource pool. This implements collaborative scheduling of a computing resource and a service requirement and implements finer-grained steering.

In a possible implementation, a sum of the service traffic that is of the target service and that is allocated to all the resource pools in the target time period is equal to the predicted service traffic value, and the service traffic that is of the target service and that is allocated to each resource pool in the target time period does not exceed the maximum value of the service traffic that is of the target service and that can be carried in the resource pool.

In a possible implementation, the steering plan meets a cost policy, and the cost policy includes that a fee generated by the service traffic that is of the target service and that is allocated to each resource pool in the target time period is the lowest.

In the foregoing technical solution, a new cost policy is provided for the target tenant. When the steering plan is determined based on the cost policy, costs of the target tenant can be further effectively reduced.

In a possible implementation, the lowest fee generated by the service traffic that is of the target service and that is allocated to each resource pool in the target time period includes an instance fee and a communication fee; and the instance fee indicates a rental fee of an instance required by the service traffic that is of the target service and that is allocated to each resource pool in the target time period, and the communication fee indicates a communication fee required for transmitting the service traffic of the target service between the steering node and each resource pool.

In a possible implementation, the maximum value of the service traffic that is of the target service and that can be carried in each resource pool is determined based on the quantity of instances that are of an instance cluster and that can be provided for the target service from the resource pool in the target time period and resource conversion information of the target service, and the resource conversion information indicates a quantity of instances required for processing a single service request of the target service.

According to a second aspect, an embodiment of this application further provides a computing apparatus. The apparatus has a function of implementing the cloud management platform node in any one of the first aspect or the possible implementations of the first aspect. For beneficial effects, refer to the descriptions of the first aspect. Details are not described herein again. The function may be implemented by hardware, or may be implemented by hardware by executing corresponding software. The hardware or the software includes one or more modules corresponding to the foregoing functions. In a possible design, a structure of the apparatus includes an obtaining module and a determining module, and optionally, may further include a communication module. The modules may perform corresponding functions in the method example in the first aspect. For details, refer to detailed descriptions in the method example. The details are not described herein again.

According to a third aspect, an embodiment of this application further provides a computing device, where the computing device includes a processor and a memory, and may further include a communication interface, and the processor executes program instructions in the memory, to perform the method according to any one of the first aspect or the possible implementations of the first aspect. The memory is coupled to the processor, and stores program instructions and data that are necessary in a process of determining a steering plan. The communication interface is configured to communicate with another device, for example, send the steering plan.

According to a fourth aspect, this application provides a computing device cluster, where the computing device cluster includes at least one computing device. Each computing device includes a memory and a processor. The processor of the at least one computing device is configured to access code in the memory to perform the method according to any one of the first aspect or the possible implementations of the first aspect.

According to a fifth aspect, this application provides a computer-readable storage medium. When the computer-readable storage medium is executed by a computing device, the computing device performs the foregoing method according to any one of the first aspect or the possible implementations of the first aspect. The storage medium stores a program. The storage medium includes but is not limited to a volatile memory, for example, a random access memory, and a nonvolatile memory, for example, a flash memory, a hard disk drive (hard disk drive, HDD), or a solid-state drive (solid-state drive, SSD).

According to a sixth aspect, this application provides a computer program product, where the computing device program product includes computer instructions, and when the computer instructions are executed by a computing device, the computing device performs the method according to any one of the first aspect or the possible implementations of the first aspect. The computer program product may be a software installation package. When the foregoing method according to any one of the first aspect or the possible implementations of the first aspect needs to be used, the computer program product may be downloaded and executed on the computing device.

According to a seventh aspect, this application further provides a computer chip, where the chip is connected to a memory, and the chip is configured to read and execute a software program stored in the memory, to perform the foregoing method according to any one of the first aspect or the possible implementations of the first aspect.

For beneficial effects of any implementation of the second aspect to the seventh aspect, refer to the descriptions of the first aspect. Details are not described herein again.

### BRIEF DESCRIPTION OF DRAWINGS

FIG. 1 is a diagram of a relationship between a region and an availability zone;
FIG. 2 is a diagram of a possible network architecture according to an embodiment of this application;
FIG. 3 is a diagram of another possible network architecture according to an embodiment of this application;
FIG. 4 is a schematic flowchart of a service steering method according to an embodiment of this application;
FIG. 5 is a diagram of a structure of a computing apparatus according to an embodiment of this application;
FIG. 6 is a diagram of a structure of a computing device according to an embodiment of this application; and
FIG. 7 is a diagram of a structure of a computing device cluster according to an embodiment of this application.

### DESCRIPTION OF EMBODIMENTS

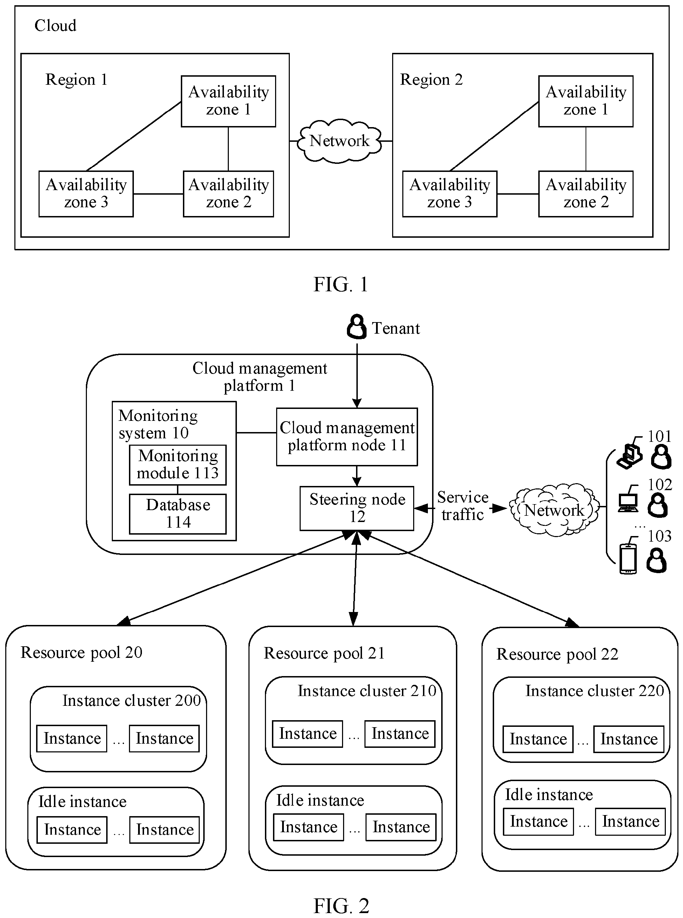

For ease of understanding, some technical terms in embodiments of this application are first explained and described.
(1) Regions (Region) and availability zones (AZ, Availability Zone) are used to describe a location of a data center. The region means a region where the data center is located. The region may be a region (for example, North China) or may be a city (for example, Beijing or Tianjin). The availability zone means a physical region where an equipment room or a site is located, and has features of independent energy consumption and network.
   As shown in FIG. 1, a region usually includes a plurality of AZs with low latency interconnection, and is used in a scenario and a service such as disaster recovery backup and load balancing in a same region. For example, there are two equipment rooms in Beijing (Region). The two equipment rooms are two availability rooms, and have independent water, electricity, networks, and the like. A plurality of AZs in a region are connected through an internal network (high-speed optical fibers) of the data center to meet tenants' requirements for creating a high-availability system across AZs. Different regions need to be interconnected through a public network.
(2) An instance may be a software program or a computing resource used to run a service, or may be referred to as a computing instance, a computing module, an algorithm instance, or the like.
(3) A virtual machine (Virtual Machine, VM) is a complete computer system that is simulated by using software and has a complete hardware system function and runs in a completely isolated environment. All tasks that can be completed in a physical computer (physical machine for short) can be implemented in a virtual machine. When creating a virtual machine on a physical machine, some hardware resources (such as a CPU, a memory, and a hard disk) of the physical machine need to be used as hardware resources of the virtual machine. Each virtual machine has an independent operating system, and the virtual machine may be operated on in a same way as the physical machine. In actual application, a physical host may be virtualized into a plurality of virtual machines by using a virtualization technology. A virtual machine may also be referred to as a cloud server (Elastic Compute Service, ECS) or an elastic instance (names may vary with cloud service providers).
(4) A container provides a way to implement operating system virtualization. This allows a user to run applications and dependencies thereof in a process where a resource is isolated.
(5) A bare metal server is a physical server that can provide a dedicated cloud resource for a tenant, that is, a host (host).

FIG. 2 is a diagram of a possible architecture of a cloud computing system according to an embodiment of this application. The cloud computing system includes a cloud management platform 1, one or more resource pools (FIG. 2 shows three resource pools 20, 21, and 22, but this is not limited thereto).

First, the resource pools are introduced. Generally, each resource pool includes a plurality of hosts (Hosts), and one or more instances are run on each host. For example, a same resource pool is used in a same region, that is, a resource pool may include all instances running in a region. In embodiments of this application, the instance may be any one or a combination of computing resources at different granularities, such as a virtual machine, a container, or a host.

A tenant can purchase an instance from one or more resource pools. Correspondingly, an instance cluster of a target service of a target tenant may be created in one or more resource pools. As shown in FIG. 2, an instance cluster 200 of the target service of the target tenant is created in the resource pool 20, an instance cluster 210 of the target service of the target tenant is created in the resource pool 21, and an instance cluster 220 of the target service of the target tenant is created in the resource pool 22. The instance cluster includes an instance leased by the target tenant in the resource pool, and may include one or more of a virtual machine, a container, or a bare metal server, and is configured to run the target service, for example, service traffic sent by a user by using user equipment 101, 102, 103, and the like, as shown on the right side of FIG. 2. An instance in each instance cluster may include one or more of a virtual machine, a container, or a bare metal server. For ease of description, the following uses an example in which an instance is a virtual machine.

In actual application, each resource pool may include virtual machines of a plurality of specifications. When leasing a virtual machine from the resource pool, the target tenant may specify one or more specifications of the virtual machine. Virtual machines of different specifications may have different hardware configurations, and the hardware configurations include but are not limited to: a quantity of CPU cores, a memory capacity, disk space, a bandwidth, and the like. Table 1 shows several virtual machine specifications and corresponding charging standards in a resource pool as an example. It should be noted that Table 1 is merely an example, and does not constitute a limitation on actual application.

**Table 1**

| Virtual machine specification | Quantity of CPU cores | Memory capacity | Disk space | Machine hour fee (1h) |
|---|---|---|---|---|
| VM_1 | 1 | 1.7 GB | 50 GB | $0.12 |
| VM_2 | 2 | 3.5 GB | 250 GB | $0.24 |
| VM_3 | 4 | 7 GB | 1000 GB | $0.48 |
| VM_4 | 8 | 15 GB | 2000 GB | $0.96 |

It should be noted that specifications of virtual machines included in different resource pools may be completely the same, or may not be completely the same, or may be completely different. Virtual machines of the same specification may have different charging standards in different resource pools. This is related to operation costs of the resource pool. In addition, it should be noted that specifications of virtual machines leased by the target tenant in different resource pools may be different. For example, specifications of virtual machines in the instance cluster 200 include VM_1 and VM_2. Specifications of virtual machines in the instance cluster 210 are VM_2. Specifications of virtual machines in the instance cluster 220 are VM_1.

In addition to virtual machines leased to tenants (that is, virtual machines included in the instance cluster), the resource pool further includes an idle virtual machine. The idle virtual machine may be understood as a virtual machine that is not occupied by another tenant or is not sold, and can be used to scale out an existing instance cluster in the resource pool. Generally, the target tenant does not purchase a fixed quantity of virtual machines. In other words, a quantity of virtual machines included in the instance clusters 200, 210, and 220 is not fixed, and scale-out and scale-in may be performed by using an elastic scaling technology. The elastic scaling technology means automatically increasing or decreasing a quantity of virtual machines based on a service requirement. For example, when computing power is insufficient due to an increase of service traffic, the quantity of virtual machines in the instance cluster is increased, in other words, idle virtual machines in a resource pool are included in the instance cluster until the service traffic decreases. After the computing power becomes sufficient, the quantity of virtual machines in the instance cluster is reduced, in other words, some idle virtual machines in the instance cluster are released back to the resource pool.

The following describes the cloud management platform 1. The cloud management platform 1 includes a monitoring system 10, a cloud management platform node 11, and a steering node 12.

The monitoring system 10 includes a monitoring module 113 and a database 114.

The monitoring module 113 is configured to monitor a performance indicator of a resource pool, including monitoring of various physical resources and virtual resources, for example, a quantity of VMs in each instance cluster in the resource pool, and a quantity of idle VMs of different specifications in the resource pool. The monitoring module 113 is responsible for collecting values of performance indicators of the resource pool in real time or periodically. The database 114 is configured to store data collected by the monitoring module 113. Optionally, the database 114 may be further configured to store other information, for example, various VM specifications included in each resource pool and corresponding charging standards (refer to Table 1), instance clusters corresponding to target services, a resource pool (a resource pool associated with the target service) in which the instance clusters are located, and a mapping relationship of a specified VM specification or the like in the resource pool. These are not limited in this application.

The cloud management platform node 11 is configured to perform a service steering method according to embodiments of this application. For example, the cloud management platform node 11 is configured to: obtain available resource information of each resource pool associated with the target service; determine, based on the available resource information of each resource pool associated with the target service, a steering plan of the target service in a future time period (denoted as a target time period). Optionally, the cloud management platform node 11 is further configured to provide a configuration page, and a target tenant may configure a service parameter on the configuration page, for example, the resource pool associated with the target service, specifications of virtual machines running the target service in the resource pool, an elastic scaling policy applied to the instance cluster, and a cost policy used to specify the steering plan (which is described below, and details are not described herein). These service parameters may be stored in the database 114.

The steering node 12 is a traffic interface of the target service, and is configured to receive service traffic of the target service. As shown on a right side in FIG. 2, user equipment may be a common computer 101, a tablet computer 102, a smartphone 103, or the like. A user may send a service request by using the user equipment. The steering node 12 is further configured to allocate service traffic of the target service in the target time period to a plurality of resource pools according to the steering plan generated by the cloud management platform node 11. In this application, the service traffic may be measured by using a quantity of service requests. For example, based on the steering plan, the steering node 12 sends 2000 service requests of the target service within the target time to the instance cluster 200, and sends 3000 other service requests of the target service within the target time to the instance cluster 210. For example, the steering node 12 may communicate with the resource pool by using a network (such as the Internet).

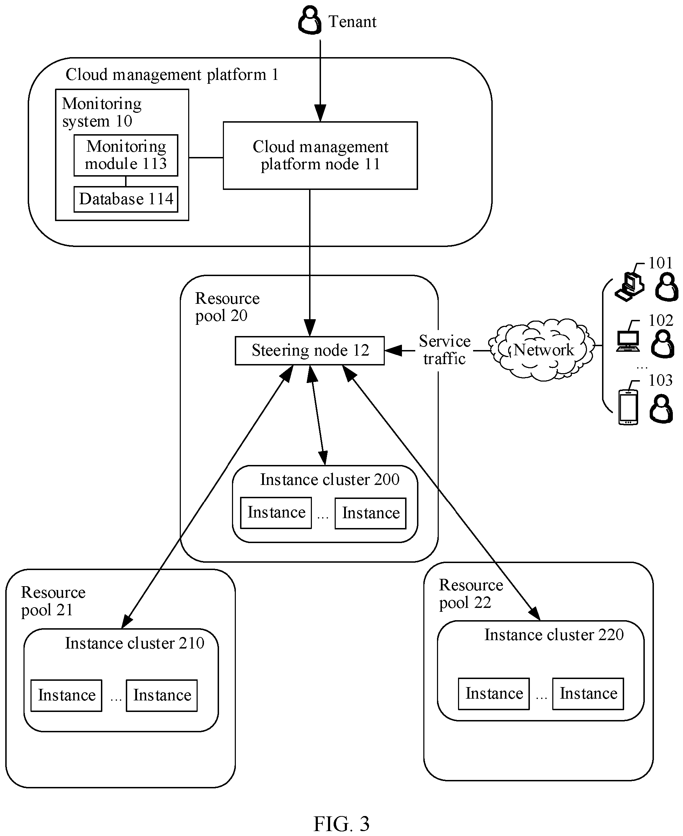

In an optional implementation, the steering node 12 may be located in a resource pool associated with the target service, to reduce a network communication fee between the steering node 12 and an instance cluster in the resource pool. For example, the target service of the target tenant is corresponding to the instance cluster 200, the instance cluster 210, and the instance cluster 220. In this case, the resource pool associated with the target service includes the resource pool 20, the resource pool 21, and the resource pool 22, and the steering node 12 of the target service may be located in the resource pool 20, or in the resource pool 21, or in the resource pool 22. As shown in FIG. 3, it is assumed that the steering node 12 of the target service is located in the resource pool 20. In this way, when the steering node 12 sends service traffic to the instance cluster 200, a network does not need to be used for transmission. This reduces a communication fee between the steering node 12 and the instance cluster 200.

It should be noted that a user and a tenant in this application are different. The tenant is a service party, and the user is a party that uses a service provided by the service party. For example, it is assumed that the service party provides an app. If the app is a search engine, the user is a party that uses the search engine, and a service request triggered by running the search engine on user equipment may be a web page obtaining request or the like. For another example, the app is video software, the user is a party that uses the video software, and a service request triggered by running the video software on the user equipment may be a video obtaining request or the like. For still another example, the app is conference software. The user may run the conference software on the user equipment, and the triggered service request may be a conference creation request, a conference joining request, or the like. Correspondingly, the virtual machine in the instance cluster corresponding to the target service may be configured to process a service request of the target service. For example, for a conference creation request, a conference resource is created and a conference link is generated, information such as the conference link is carried in a conference response and replied to the steering node 12, and is replied to a corresponding user by a steering model 13.

It should be noted that the system architecture shown in FIG. 2 or FIG. 3 is merely an example. In actual application, a cloud computing system may include more or fewer nodes than those in FIG. 2 or FIG. 3. This is not limited in embodiments of this application.

This application provides a service steering method. When formulating a steering plan, the steering plan is formulated based on a processing capability of each resource pool associated with a target service, to ensure that a service request allocated to an instance cluster can be processed in a timely manner as much as possible, and fine-grained steering is implemented.

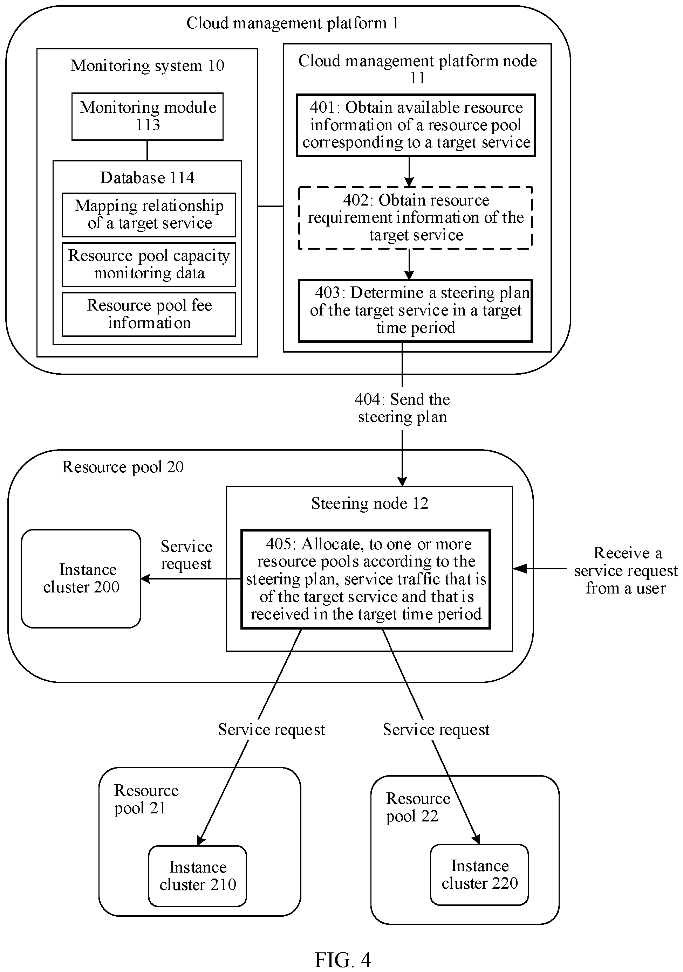

With reference to FIG. 4, the following describes the method in detail by using an example in which the service steering method provided in embodiments of this application is applied to the system shown in FIG. 3. For ease of description, a virtual machine is still used as an example for description. All virtual machines in the following may be replaced with instances. It is assumed that in FIG. 3, the target service of the target tenant corresponds to the instance cluster 200, the instance cluster 210, and the instance cluster 220. For ease of description, the "target service of the target tenant" is referred to as the "target service" below.

FIG. 4 is a schematic flowchart corresponding to a service steering method according to an embodiment of this application. As shown in FIG. 4, the method includes the following steps:
Step 401: The cloud management platform node 11 obtains available resource information of each resource pool associated with a target service.

The resource pool associated with the target service is a resource pool in which an instance cluster corresponding to the target service is located. For example, in FIG. 3, the target service corresponds to the instance cluster 200, the instance cluster 210, and the instance cluster 220. In this case, the resource pool associated with the target service includes the resource pool 20, the resource pool 21, and the resource pool 22.

The available resource information of each resource pool indicates a quantity (denoted as a target quantity) of virtual machines that can be provided for the target service from the resource pool in a target time period. For example, the target quantity is a quantity of virtual machines in the resource pool that can be used to scale out the instance cluster corresponding to the target service.

For example, the target quantity is a quantity of idle virtual machines of a target specification in the resource pool in the target time period. The target specification indicates a virtual machine specification specified by the target service in the resource pool. For example, refer to Table 2. Table 2 shows an example of a mapping relationship between a target service and a corresponding instance cluster, a resource pool, and a virtual machine specification.

**Table 2**

| Service | Instance cluster | Resource pool | Virtual machine specification |
|---|---|---|---|
| Target service | Instance cluster 200 | Resource pool 20 | VM_1 |
| | Instance cluster 210 | Resource pool 21 | VM_1 |
| | Instance cluster 220 | Resource pool 22 | VM_1 |

A quantity of virtual machines that can be provided for the target service from the resource pool 20 in the target time period is a quantity of idle virtual machines whose specifications are VM_1 in the resource pool 20 in the target time period. Similarly, a quantity of virtual machines that can be provided for the target service from the resource pool 21 in the target time period is a quantity of idle virtual machines whose specifications are VM_1 in the resource pool 21 in the target time period.

Optionally, when virtual machine specifications specified by a plurality of services (including the target service) in the resource pool are the same, the target quantity may be determined based on a quantity of idle virtual machines of the target specification in the resource pool in the target time period and a proportion corresponding to the target service in the resource pool. For example, with reference to Table 2, it is assumed that both a target specification corresponding to a target service (for example, a service A) and a target specification corresponding to a service B in the resource pool 20 are VM_1. It is assumed that a proportion corresponding to the target service in the resource pool 20 is 2/3. If the quantity of idle virtual machines whose specifications are VM_1 in the resource pool 20 in the target time period is 30, the quantity of virtual machines that can be provided for the target service from the resource pool 20 in the target time period is 30*2/3 = 20. The proportion corresponding to the target service may be a preset value, or may be a ratio of a scale of an instance cluster corresponding to the target service to a scale of an instance cluster corresponding to the service B in the resource pool 20 before the target time period. A scale of an instance cluster may be represented by a quantity of virtual machines included in the instance cluster.

It should be noted that the target service may further correspond to a plurality of specified virtual machine specifications in the resource pool. This is not limited in this application. In addition, virtual machine specifications specified for the target service in different resource pools may be the same or may be different. This is not specifically limited. Table 3 shows another mapping relationship of the target service as an example.

**Table 3**

| Service | Instance cluster | Resource pool | Virtual machine specification |
|---|---|---|---|
| Target service | Instance cluster 200 | Resource pool 20 | VM_1 and VM_2 |
| | Instance cluster 210 | Resource pool 21 | VM_2 |
| | Instance cluster 220 | Resource pool 22 | VM_1 and VM_3 |

With reference to Table 3, a quantity of virtual machines that can be provided for the target service from the resource pool 20 in the target time period is a sum of a quantity of idle virtual machines whose specifications are VM_1 and a quantity of idle virtual machines whose specifications are VM_2 in the resource pool 20 in the target time period. For example, if the quantity of idle virtual machines whose specifications are VM_1 in the resource pool 20 in the target time period is 20, and the quantity of idle virtual machines whose specifications are VM_2 is 30, the quantity of virtual machines that can be provided for the target service from the resource pool in the target time period is 50. Similarly, a quantity of virtual machines that can be provided for the target service from the resource pool 21 in the target time period is a quantity of idle virtual machines whose specifications are VM_2 in the resource pool 21 in the target time period. A quantity of virtual machines that can be provided for the target service from the resource pool 22 in the target time period is a sum of a quantity of idle virtual machines whose specifications are VM_1 and a quantity of idle virtual machines whose specifications are VM_3 in the resource pool 22 in the target time period.

Optionally, when virtual machine specifications specified by a plurality of services (including the target service) in the resource pool partially or completely overlap, the target quantity may be determined based on a quantity of idle virtual machines of the target specification in the resource pool in the target time period and a proportion corresponding to the target service in the resource pool. For example, with reference to Table 3, target specifications corresponding to a target service (for example, a service A) in the resource pool 20 are VM_1 and VM_2. It is assumed that target specifications corresponding to a service B in the resource pool 20 are all VM_1. It is assumed that in the resource pool 20, a proportion corresponding to the target service is 2/3. If a quantity of idle virtual machines whose specifications are VM_1 in the resource pool 20 in the target time period is 30, and a quantity of idle virtual machines whose specifications are VM_2 in the resource pool 20 in the target time period is 15, a quantity (that is, a target quantity) of virtual machines that can be provided for the target service from the resource pool 20 in the target time period is 30*2/3 + 15 = 35. For another example, it is assumed that target specifications corresponding to a target service (for example, a service A) and target specifications corresponding to a service B in the resource pool 20 are both VM_1 and VM_2. It is assumed that a ratio of the service A to the service B in the resource pool 20 is 2:1. If a sum of quantities of idle virtual machines whose specifications are VM_1 and idle virtual machines whose specifications are VM_2 in the resource pool 20 in the target time period is 60, a quantity (that is, a target quantity) of virtual machines that can be provided for the target service from the resource pool 20 in the target time period is 60*2/3 = 40.

In actual application, for ease of management, a same tenant usually specifies, for a same service, virtual machines of a same specification in different resource pools. The following uses an example in which specifications of virtual machines that are used to run the target service and that are specified by the target tenant in each resource pool are the same, such as Table 2, for description. It should be noted that Table 2 is merely an example, and does not constitute a limitation on the mapping relationship in embodiments of this application. For example, Table 2 may alternatively not include the instance cluster column, or Table 2 may be split into a plurality of lists for storage. This is not limited in this application.

The following describes how to determine a quantity (or a target quantity) of virtual machines that can be provided for a target service in each resource pool in a target time period.

A resource pool such as the resource pool 20 is used as an example. For example, a prediction process may include: based on a quantity of idle virtual machines of the target specification in the resource pool 20 in a period of historical time (denoted as a first historical window), predicting a quantity of idle virtual machines of the target specification in the resource pool 20 in the target time period.

For example, the first historical window may be an adjacent time period before the target time period. For example, the target time period is 2:00 to 2:01 on a day, and the first historical window may be 1:30 to 2:00 on the same day. For example, with reference to Table 2, when 2:00 is reached, a quantity of idle virtual machines whose specifications are VM_1 from 2:00 to 2:01 on the day is predicted based on a plurality of pieces of sampled data of the resource pool 20 from 1:30 to 2:00 on the day. The plurality of pieces of sampled data are quantities of idle virtual machines whose specifications are VM_1 in the resource pool 20 at different moments from 1:30 to 2:00 on the day. For example, if a sampling interval is 5 minutes, the plurality of pieces of sampled data may include quantities of idle virtual machines whose specifications are VM_1 in the resource pool 20 at moments 1:30, 1:35, 1:40, ..., and 2:00 on the day. Similarly, when 2:01 is reached, a quantity of idle virtual machines whose specifications are VM_1 from 2:01 to 2:02 on the day is predicted based on a plurality of pieces of sampled data of the resource pool 20 from 1:31 to 2:01 on the day. When 2:02 is reached, a quantity of idle virtual machines whose specifications are VM_1 from 2:02 to 2:03 of the day is predicted based on a plurality of pieces of sampled data of the resource pool 20 from 1:32 to 2:02 on the day. The sampled data in the first historical window may be obtained from a database 114, or may be obtained from another device. For example, the sampled data may be collected by a monitoring module 113. This is not limited in embodiments of this application, and similar details are not described again. The foregoing manner may also be referred to as real-time prediction, and is usually applied to a scenario in which prediction precision is high or a quantity of idle virtual machines in a resource pool does not have a periodic rule.

For another example, the first historical window is a historical same-period window of the target time period. For example, when a quantity of idle virtual machines of the target specification in the resource pool 20 has a periodic rule, the first historical window may be a historical same-period window of the target time period. For example, when the quantity of idle virtual machines of the target specification in the resource pool 20 has an intra-day rule, it is assumed that the target time period is 0:00 to 24:00 on 2024.04.10, and the first historical window may be 0:00 to 24:00 on 2024.04.09. Alternatively, the first historical window may be 0:00 to 24:00 on 2024.04.08, or the like. An interval between the first historical window and the target time period is k days, and k is a positive integer. For another example, when the quantity of idle virtual machines of the target specification in the resource pool 20 has an intra-week rule, it is assumed that the target time period is 0:00 to 24:00 on 2024.04.25, and the first historical window may be 0:00 to 24:00 on 2024.04.18. Alternatively, the first historical window may be 0:00 to 24:00 on 2024.04.11 or the like. The quantity of idle virtual machines in the target specification in the resource pool may alternatively have changing periods in different time lengths, such as an intra-month rule. This is not specifically limited. This prediction manner is usually applied to a scenario in which a quantity of idle virtual machines of the target specification in a resource pool has a periodic rule, so that computing power overheads can be reduced while accuracy is ensured.

It should be noted that the foregoing example is merely an example. Alternatively, the length of the first historical window, the sampling interval, the prediction interval, the data output interval (which may be equal to the length of the target time period), the length of the target time period, and the like may alternatively be other values. This is not specifically limited. In addition, it should be noted that, when prediction is performed, there may be one or a plurality of first historical windows. For example, the plurality of historical windows may include one or more adjacent time periods before the target time period, and/or historical same-period windows in one or more target time periods. Time lengths of a plurality of first historical windows may be the same, different, or not completely the same. This is not limited in this application. For example, when the target time period is 0:00 to 24:00 on 2024.04.25, the plurality of corresponding first historical windows may be 0:00 to 24:00 on 2024.04.18 and 0:00 to 24:00 on 2024.04.11, or 0:00 to 24:00 on 2024.04.18 and 23:00 to 24:00 on 2024.04.24, or the like. In addition, the foregoing prediction manner is merely an example, and is not specifically limited. Any prediction method is applicable to embodiments of this application.

In the foregoing manner, the available resource information of each resource pool associated with the target service is separately obtained. The foregoing prediction process may be performed by the cloud management platform node 11, or may be performed by another device (for example, the monitoring module 113). This is not specifically limited. If the prediction process is performed by another device, the cloud management platform node 11 obtains, from the another device, the available resource information of each resource pool associated with the target service. It is assumed that the available resource information that is of each resource pool and that is associated with the target service and that is obtained by the cloud management platform node 11 is shown in Table 4.

**Table 4**

| Service | Time period | Resource pool | Virtual machine specification | Available resource information |
|---|---|---|---|---|
| Target service | Target time period | Resource pool 20 | VM_1 | 100 VMs |
| | | Resource pool 21 | VM_1 | 200 VMs |
| | | Resource pool 22 | VM_1 | 40 VMs |

It should be noted that Table 4 is merely an example, and a storage form and content of the available resource information of the resource pool are not limited in this application.

Step 402: The cloud management platform node 11 obtains resource requirement information of the target service.

The resource requirement information of the target service may indicate a predicted service traffic value of the target service in the target time period. For example, the prediction process may include: based on service traffic data of the target service in a historical period (denoted as a second historical window), predicting service traffic of the target service in the target time period. The obtained value is the predicted service traffic value. The prediction process may be performed by the cloud management platform node 11, or may be performed by another device (for example, the monitoring module 113). In this way, the cloud management platform node 11 may obtain the resource requirement information of the target service from the another device.

Similarly, the second historical window may be an adjacent time period before the target time period, or a corresponding historical same-period window of the target time period, for example, when the service traffic of the target service has a periodic rule, for example, an intra-day rule or an intra-week rule.

It should be noted that the length of the second historical window, the sampling interval, the prediction interval, the data output interval (which may be equal to the length of the target time period), the length of the target time period, and the like may alternatively be other values. This is not specifically limited. In addition, it should be noted that, when prediction is performed once, there may be one or a plurality of second historical windows. For example, the plurality of historical windows may include one or more adjacent time windows before the target time period, and/or one or more historical same-period windows of the target time period. Time lengths of the plurality of second historical windows may be the same, different, or not completely the same. This is not limited in this application. For details, refer to the foregoing related descriptions of predicting, based on the first historical window, the quantity of idle virtual machines in the resource pool in the target time period. Details are not described herein again.

Step 403: The cloud management platform node 11 generates a steering plan of the target service in the target time period.

The following describes two manners of determining the steering plan:
Manner 1: Generate, based on the available resource information of each resource pool associated with the target service, the steering plan of the target service in the target time period.

The steering plan may indicate a maximum value of service traffic that is of the target service and that can be carried in each resource pool in the target time period.

For example, based on the resource conversion information of the target service, the quantity of virtual machines that can be provided for the target service from the resource pool in the target time period may be converted into a maximum value of service traffic that is of the target service and that can be carried in the resource pool. The resource conversion information of the target service indicates a quantity of computing resources required for processing a single service request of the target service. The computing resources may be computing resources at different granularities such as a virtual machine or a CPU core. For example, the resource conversion information of the target service indicates a quantity of CPU cores or a quantity of VMs required for running a service request of the target service.

For example, Table 4 is used as an example. It is assumed that resource conversion information of the target service indicates that one service request requires 0.1 VM whose specification is VM_1. With reference to Table 4, a maximum value of service traffic that is of the target service and that can be carried in each resource pool associated with the target service in the target time period may be determined. For example, the maximum service traffic that is of the target service and that can be carried in the resource pool 20 is 100/0.1 = 1000 service requests. Based on this manner, a maximum value of service traffic that is of the target service and that can be carried in each resource pool associated with the target service in the target time period is sequentially calculated, as shown in Table 5.

**Table 5**

| Service | Resource pool | Available resource information | Maximum value of service traffic that is of the target service and that can be carried (unit: service request) |
|---|---|---|---|
| Target service | Resource pool 20 | 100 VMs | 1000 |
| | Resource pool 21 | 200 VMs | 2000 |
| | Resource pool 22 | 300 VMs | 3000 |

If the resource conversion information of the target service indicates a computing resource such as a quantity of CPU cores required for running a service request of the target service, a maximum value of service traffic that is of the target service and that can be carried in each resource pool associated with the target service in the target time period may be determined with reference to the available resource information of the resource pool 20, the resource conversion information of the target service, and the virtual machine specification information. The resource specification information indicates a quantity of computing resources included in a virtual machine of the specification, as shown in Table 1.

For example, the resource conversion information of the target service indicates that one service request requires 0.1 CPU core. With reference to Table 1, it may be determined that the virtual machine whose specification is VM_1 includes one CPU core. In this case, it may be determined with reference to Table 5 that in the target time period, a maximum value of service traffic that is of the target service and that can be carried in the resource pool 20 is 100*1/0.1 = 1000 service requests.

Manner 2: Generate, based on the resource requirement information of the target service and the available resource information of each resource pool associated with the target service, the steering plan of the target service in the target time period.

The steering plan may indicate that, in the target time period, a sum of service traffic that is of the target service and that is allocated to one or more resource pools is equal to a predicted service traffic value, and the service traffic that is of the target service and that is allocated to each resource pool in the time period does not exceed a maximum value of service traffic that is of the target service and that can be carried in the resource pool. In other words, the steering plan indicates resource pools to which service traffic of the target service is allocated in the target time period, and an amount of service traffic allocated to each resource pool.

It may be understood that there are a plurality of types of steering plans that meet the condition. For example, with reference to the example in Table 5, it is assumed that the predicted service traffic value of the target service in the target time period is 1000 service requests. The steering plan may indicate to allocate 1000 service requests to the resource pool 20. Alternatively, the steering plan indicates to allocate 500 service requests to the resource pool 20, and to allocate the remaining 500 service requests to the resource pool 21. Alternatively, the steering plan indicates to allocate 500 service requests to the resource pool 20, and to allocate the remaining 500 service requests to the resource pool 22, and so on. In an optional implementation, the cloud management platform node 11 may select a steering plan based on a cost policy. For example, the cost policy includes: a fee generated by allocating predicted service traffic of the target service to one or more resource pools in the target time period is the lowest.

For example, the fee includes but is not limited to a virtual machine fee and a communication fee. The virtual machine fee indicates a sum of rental fees of virtual machines that are required by each resource pool to process the allocated service traffic when the predicted service traffic of the target service is allocated to one or more resource pools in the target time period. The rental fees of the virtual machines may be charged according to machine time, where Machine hour = Quantity of machines x Machine occupation time (for example, a unit is h). Table 1 shows charging standards for virtual machines of various specifications in one resource pool. In this application, the rental fees of the virtual machines may include a quantity of virtual machines required for processing allocated service traffic in each resource pool x target time period length (Zh) x a fee of a virtual machine of this specification in the resource pool per machine time when service traffic of the target service is allocated to one or more resource pools. It should be understood that virtual machines of a same specification in different resource pools may have different prices. This is related to operation costs (such as a water fee and an electricity fee) of the resource pool. For example, operation costs of a resource pool located in a city center are higher than that of a resource pool located in a suburb of the city, and correspondingly, a virtual machine in a resource pool with higher operation costs has a higher price.

The communication fee indicates a communication fee required for transmitting the service traffic of the target service between the steering node and each resource pool. For example, the communication fee may include a bandwidth fee required by the steering node 12 to send the service traffic of the target service to each resource pool, and a bandwidth fee of a service response replied by each target resource pool. It should be noted that a bandwidth fee between the steering node 12 and the target resource pool may be 0. As shown in FIG. 3, no bandwidth fee is required when the steering node 12 allocates the service request of the target service to the instance cluster 200.

Further, in an optional implementation, the cloud management platform node 11 may further determine the steering plan based on a constraint condition. For example, the constraint condition includes but is not limited to: The steering plan meets a service level agreement (service level agreement, SLA) of the target service. The SLA may be evaluated based on indicators such as a response delay and jitter of the instance cluster. Details are not described herein. Theoretically, a tenant chooses to deploy a service in a resource pool that meets the SLA, that is, a resource pool in which all resource pools of the target service can meet the SLA. However, when the SLA of the target service is changed, a resource pool in which the target service is located may not meet the SLA of the target service. In this case, for example, the monitoring module 113 may measure, in real time or periodically, information required for evaluating quality of service of each resource pool in the resource pool, to calculate an SLA of the resource pool, and store the calculated SLA of each resource pool in the database 114, so that the cloud management platform node 11 can obtain the SLA of each resource pool, and select, from a plurality of resource pools associated with the target service, a resource pool that can meet the SLA of the target service. In addition, information such as the SLA of the target service may be configured and updated by a service administrator at the cloud management platform node 11, and updated SLA information is stored in the database 114, or may be stored in another device. This is not specifically limited. It should be noted that the constraint condition may further include another condition, for example, not exceeding a maximum quantity of connections in an AZ or a region. This is not limited in this application.

In the foregoing two manners, the steering plan may be output in an absolute value format, and indicates a quantity of service requests that are of the target service and that can be carried in each resource pool. For example, in the target time period, maximum values of service traffic that is of the target service and that can be carried in the resource pool 20, the resource pool 21, and the resource pool 22 are respectively 1000 service requests, 2000 service requests, and 3000 service requests. Alternatively, the steering plan is output in a traffic ratio format, and indicates a ratio at which service traffic of the target service is allocated to all resource pools in the target time period. For example, it may be determined based on Table 5 that, in the target time period, a ratio of the service traffic that is of the target service and that is allocated to the resource pool 20, the resource pool 21, and the resource pool 22 is 1:2:3. When the steering plan indicates the traffic ratio, the steering plan may be compatible with the steering node that performs steering according to the preset traffic ratio in the foregoing load balancing policy. This improves applicability of the technical solutions in this application.

Optionally, the steering plan may alternatively indicate priority information of the service traffic that is of the target service and that is allocated to all resource pools in the target time period. For example, service traffic of the target service is preferentially allocated to a resource pool with a high priority. When service traffic allocated to the resource pool reaches a maximum value of service traffic that can be carried in the resource pool, the service traffic of the target service is allocated to a resource pool with a lower priority, and so on.

The priority information of the resource pool may be determined based on a fee required by each resource pool to process service traffic of the target service. For example, priority information of a plurality of resource pools may be determined based on a fee ratio of the plurality of resource pools. For example, the fee ratio of the plurality of resource pools may be a ratio of fees of the resource pools for processing a single service request. The lower the fee for processing a single service request, the higher the priority of the resource pool. The virtual machine fee means a rental fee of a virtual machine required for processing a single service request. If a plurality of virtual machine specifications are specified for the target service in one resource pool, the virtual machine fee may be determined based on weighted values of virtual machine fees of the plurality of specifications. For example, virtual machine specifications specified for the target service from the resource pool 20 include VM_1 and VM_2. In the target time period, the resource pool 20 can provide 30 virtual machines whose specifications are VM_1 for the target service, and 20 virtual machines whose specifications are VM_2 for the target service. A fee per machine hour of the virtual machine whose specification is VM_ 1 is a. A fee per machine hour of the virtual machine whose specification is VM_2 is b. Therefore, an average fee for each virtual machine is a*3/5+b*2/5. Then, an average quantity of service requests that can be processed by each virtual machine is calculated, to calculate an average rental fee that is of the virtual machine and that is required for processing one service request in the resource pool 20.

The communication fee means a communication fee required for transmitting a single service request, for example, a bandwidth fee required by the steering node 12 to send the service traffic to the resource pool, and a bandwidth fee of receiving a service response to the service request replied by the resource pool. It should be noted that, when the steering node 12 is located in the resource pool, a bandwidth fee between the steering node 12 and the resource pool is 0. For details, refer to the foregoing descriptions. The details are not described herein again.

It should be noted that there are a plurality of manners of determining the priority information of the plurality of resource pools. The foregoing is merely an example. This is not limited in embodiments of this application.

Step 404: The cloud management platform node 11 sends the steering plan to the steering node 12.

Step 405: The steering node 12 allocates service traffic of the target service in the target time period to one or more resource pools according to the steering plan.

For example, the steering plan indicates that in the target time period (for example, 16:00 to 16:01 on 2024.04.09), maximum values of service traffic that is of the target service and that can be carried in the resource pool 20, the resource pool 21, and the resource pool 22 are respectively 1000 service requests, 2000 service requests, and 3000 service requests. The steering node 12 allocates service traffic that is of the target service and that is within 16:00 to 16:01 on 2024.04.09 to one or more resource pools according to the steering plan. The allocation may be performed in a random sequence, or may be performed in a polling mode based on load balancing, or may be performed in a preset sequence, or an allocation sequence may be determined based on priority information that is of a plurality of resource pools and that is indicated in a previous steering plan. A quantity of service requests allocated to the resource pool 20 does not exceed 1000, a quantity of service requests allocated to the resource pool 21 does not exceed 2000, and a quantity of service requests allocated to the resource pool 22 does not exceed 3000.

If the steering plan further indicates that a priority order of the plurality of resource pools corresponding to the target service is as follows: resource pool 20 > resource pool 21 > resource pool 22, in the time period from 16:00 to 16:01 on 2024.04.09, the steering node 12 first preferentially allocates received service traffic of the target service to the resource pool 20, and then allocates the service traffic of the target service to the resource pool 21 when service traffic allocated to the resource pool 20 reaches 1000 service requests. When the service traffic allocated to the resource pool 21 reaches 2000 service requests, the service traffic of the target service is allocated to the resource pool 22, until the service traffic allocated to the resource pool 22 reaches 3000. It should be noted that the foregoing steering plan is pre-allocation, a quantity of service requests of the target service that are actually received by the steering node 12 in the target time period is not a fixed value, and the foregoing steering plan does not limit the quantity to 6000 (1000+2000+3000). For example, the quantity of service requests of the target service that are received by the steering node in the target time period may be 600, and the steering node 12 only needs to allocate the 600 received service requests to the resource pool 20. Similar details are not described again.

For another example, the steering plan indicates that in the target time period, a quantity of service requests that are of the service traffic of the target service and that are allocated to the resource pool 20 (or the instance cluster 200) is 1000, a quantity of service requests allocated to the resource pool 21 (or the instance cluster 210) is 500, and a quantity of service requests allocated to the resource pool 22 (or the instance cluster 220) is 400. The steering node 12 allocates, according to the steering plan, the service request received in the target time period to one or more resource pools.

If the steering plan further indicates that the priority order of the plurality of resource pools corresponding to the target service is as follows: resource pool 20 > resource pool 22 > resource pool 21, in the time period from 16:00 to 16:01 on 2024.04.09, the steering node 12 first sends the received service requests of the target service to the resource pool 20. When a quantity of service requests sent to the resource pool 20 reaches 1000, if continuously receiving service requests of the target service, the steering node 12 sends the received service requests of the target service to the resource pool 22. When a quantity of service requests sent to the resource pool 22 reaches 400, if continuously receiving service requests of the target service, the steering node 12 sends the received service requests of the target service to the resource pool 21 until the quantity reaches 500.

It should be noted that step 404 is an optional step. If the cloud management platform node 11 and the steering node 12 are located in a same computing device, the cloud management platform node 11 may not send the steering plan to the steering node 12. In addition, when the quantity of instances that are of the instance cluster and that can be provided for the target service in each resource pool in the target time period is determined, only a quantity of virtual machines that are used to scale out the instance cluster of the target service in the resource pool in the target time period is included. Optionally, a quantity of virtual machines included in the instance cluster of the target service, for example, a quantity of virtual machines in the instance cluster at a start moment of the target time period, may be further included.

Based on the foregoing design, the cloud management platform node 11 determines, based on the available resource information of the resource pool associated with the target service, the steering plan of the target service in the target time period, to predetermine service traffic that is of the target service and that is allocated to each resource pool in different time periods. This helps better implement traffic allocation planning, avoid a case in which the service traffic allocated to the instance cluster exceeds a bearing capability of the resource pool to which the instance cluster belongs, implement collaborative scheduling of a computing resource and a service requirement, implement fine-grained steering, and reduce or avoid large-scale service request congestion in a scenario of a traffic burst. Further, a new cost policy is provided for the target tenant. When the steering plan is determined by using the cost policy, costs of the target tenant can be further effectively reduced.

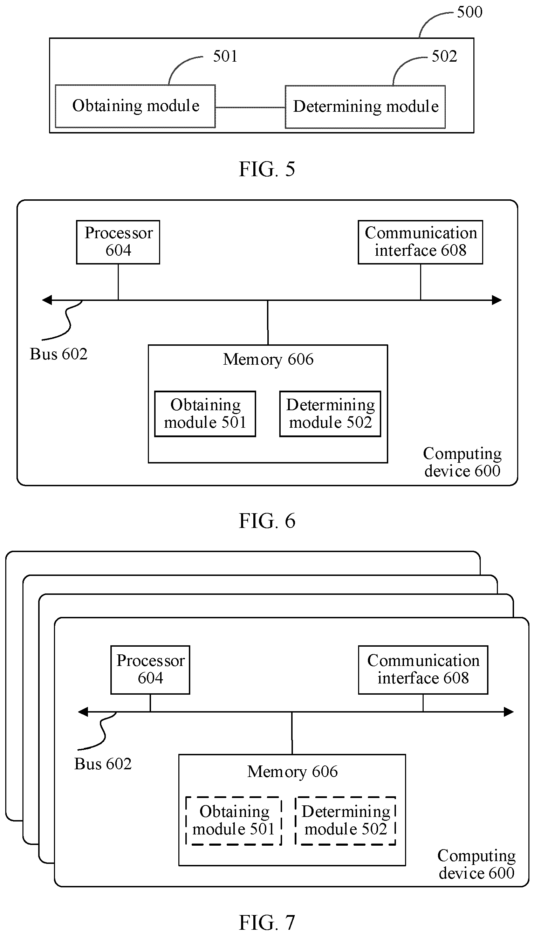

Based on a same inventive concept as the method embodiment, an embodiment of this application further provides a computing apparatus. The computing apparatus is configured to perform the method performed by the cloud management platform node 11 in the method embodiment in FIG. 4 or FIG. 5. As shown in FIG. 5, a computing apparatus 500 includes an obtaining module 501 and a determining module 502. Specifically, in the computing apparatus 500, a connection is established between modules by using a communication path.

The obtaining module 501 is configured to obtain available resource information of each resource pool associated with a target service. For a specific implementation, refer to the descriptions of step 401 in FIG. 4. Details are not described herein again.

The determining module 502 is configured to determine, based on the available resource information of each resource pool associated with the target service, a steering plan of the target service in a future time period. For a specific implementation, refer to the descriptions of step 402 in FIG. 4. Details are not described herein again.

In a possible implementation, the available resource information of each resource pool indicates a quantity of idle instances in the resource pool in the time period, and the idle instance is not occupied by another tenant in the resource pool in the time period.

In a possible implementation, the steering plan indicates priority information of the service traffic that is of the target service and that is allocated to all resource pools in the time period.

In a possible implementation, the obtaining module 501 is further configured to obtain resource requirement information of the target service, where the resource requirement information indicates a predicted service traffic value of the target service in the time period. For a specific implementation, refer to the descriptions of step 402 in FIG. 4. Details are not described herein again.

In a possible implementation, a sum of the service traffic that is of the target service and that is allocated to all the resource pools in the time period is equal to the predicted service traffic value, and the service traffic that is of the target service and that is allocated to each resource pool in the time period does not exceed a maximum value of service traffic that is of the target service and that can be carried in the resource pool.

In a possible implementation, the steering plan meets a cost policy, and the cost policy includes that a fee generated by the service traffic that is of the target service and that is allocated to each resource pool in the time period is the lowest.

In a possible implementation, the lowest fee generated by the service traffic that is of the target service and that is allocated to each resource pool in the target time period includes an instance fee and a communication fee; and the instance fee indicates a rental fee of an instance required by the service traffic that is of the target service and that is allocated to each resource pool in the time period, and the communication fee indicates a communication fee required for transmitting the service traffic of the target service between a steering node and each resource pool.

In a possible implementation, a maximum value of service traffic that is of the target service and that can be carried in each resource pool is determined based on a quantity of instances that are of an instance cluster and that can be provided for the target service from the resource pool in the time period and resource conversion information of the target service, and the resource conversion information indicates a quantity of instances required for processing a single service request of the target service.

For example, the following uses the determining module 502 in the computing apparatus 500 as an example to describe an implementation of the determining module 502. Similarly, for an implementation of the obtaining module 501, refer to the implementation of the determining module 502.

When implemented by using software, the determining module 502 may be an application program or a code block running on a computer device. The computer device may be at least one of computing devices such as a physical host, a virtual machine, or a container. Further, there may be one or more computer devices. For example, the determining module 502 may be an application program running on a plurality of hosts/virtual machines/containers. It should be noted that the plurality of hosts/virtual machines/containers configured to run the application program may be distributed in a same availability zone (availability zone, AZ), or may be distributed in different AZs. The plurality of hosts/virtual machines/containers configured to run the application program may be distributed in a same region (region), or may be distributed in different regions. Generally, one region may include a plurality of AZs.

Similarly, the plurality of hosts/virtual machines/containers configured to run the application program may be distributed in a same virtual private cloud (virtual private cloud, VPC), or may be distributed in a plurality of VPCs. Generally, one region may include a plurality of VPCs, and one VPC may include a plurality of AZs.

When implemented by using hardware, the determining module 502 may include at least one computing device such as a server. Alternatively, the determining module 502 may be a device implemented by using an application-specific integrated circuit (application-specific integrated circuit, ASIC), a programmable logic device (programmable logic device, PLD), or the like. The PLD is, for example, a complex programmable logical device (complex programmable logical device, CPLD), a field programmable gate array (field-programmable gate array, FPGA), a generic array logic (generic array logic, GAL), or any combination thereof.

A plurality of computing devices included in the determining module 502 may be distributed in a same AZ, or may be distributed in different AZs. The plurality of computing devices included in the determining module 502 may be distributed in a same region, or may be distributed in different regions. Similarly, the plurality of computing devices included in the determining module 502 may be distributed in a same VPC, or may be distributed in a plurality of VPCs. The plurality of computing devices may be any combination of computing devices such as a server, an ASIC, a PLD, a CPLD, an FPGA, and a GAL.

This application further provides a computing device 600. As shown in FIG. 6, the computing device 600 includes: a bus 602, a processor 604, a memory 606, and a communication interface 608. The processor 604, the memory 606, and the communication interface 608 communicate with each other by using the bus 602. The computing device 600 may be a server or a terminal device. It should be understood that quantities of processors and memories in the computing device 600 are not limited in this application.

The bus 602 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used for representation in FIG. 6, but it does not indicate that there is only one bus or only one type of bus. The bus 602 may include a channel through which information is transmitted between parts (for example, the memory 606, the processor 604, and the communication interface 608) of the computing device 600.

The processor 604 may include any one or more of a central processing unit (central processing unit, CPU), a graphics processing unit (graphics processing unit, GPU), a microprocessor (microprocessor, MP), or a digital signal processor (digital signal processor, DSP).

The memory 606 may include a volatile memory (volatile memory), for example, a random access memory (random access memory, RAM). The processor 604 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 606 stores executable program code, and the processor 604 executes the executable program code to separately implement the foregoing functions of the obtaining module 501 and the determining module 502, to implement the service steering method. In other words, the memory 606 stores instructions used by the computing apparatus 500 to perform the service steering method provided in this application.

The communication interface 608 uses a transceiver module, such as but not limited to a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device such as a desktop computer, a notebook computer, or a smartphone.

As shown in FIG. 7, the computing device cluster includes at least one computing device 600. A memory 606 in one or more computing devices 600 in the computing device cluster may store same instructions used by the computing apparatus 500 to perform the service steering method provided in this application.

In some possible implementations, one or more computing devices 600 in the computing device cluster may also be configured to execute some instructions that are used by the computing apparatus 500 to perform the service steering method provided in this application. In other words, a combination of the one or more computing devices 600 may jointly execute the instructions used by the computing apparatus 500 to perform the service steering method provided in this application.

It should be noted that memories 606 in different computing devices 600 in the computing device cluster may store different instructions, and are configured to perform some functions of the computing apparatus 500. In other words, the instructions stored in the memories 606 in different computing devices 600 may implement functions of one or more modules of the obtaining module 501 and the determining module 502.

An embodiment of this application further provides a computer program product including instructions. The computer program product may be software or a program product that includes instructions and that can run on a computing device or be stored in any usable medium. When the computer program product runs on at least one computer device, the at least one computer device is enabled to perform the service steering method performed by the cloud management platform node 11 in the embodiment in FIG. 4 or FIG. 5. For details, refer to descriptions of steps in FIG. 4 or FIG. 5. The details are not described herein again.

Embodiments of this application further provide a computer-readable storage medium. The computer-readable storage medium may be any usable medium that can be stored by a computing device, or a data storage device such as a data center that includes one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing service steering method performed by the cloud management platform node 11 in the embodiment in FIG. 4 or FIG. 5. For details, refer to descriptions of steps in FIG. 4 or FIG. 5. The details are not described herein again.

Based on the descriptions of the foregoing implementations, a person skilled in the art may clearly understand that, for ease and brevity of description, division into the foregoing functional modules is merely used as an example for description. In actual application, the foregoing functions may be allocated to different functional modules for implementation based on a requirement. In other words, an internal structure of the apparatus is divided into different functional modules, to implement all or some of the foregoing described functions.

In the several embodiments provided in this application, it should be understood that the disclosed apparatus and method may be implemented in other manners. For example, the apparatus embodiment described above is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions of embodiments.

In addition, functional units (or modules) in embodiments of this application may be integrated into one processing unit, each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Optionally, computer-executable instructions in embodiments of this application may also be referred to as application program code. This is not specifically limited in embodiments of this application.

All or some of the foregoing embodiments may be implemented by using software, hardware, firmware, or any combination thereof. When software is used for implementation, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

Various illustrative logical units and circuits described in embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in embodiments of this application may be directly embedded into hardware, a software unit executed by a processor, or a combination thereof. The software unit may be stored in a RAM memory, a flash memory, a ROM memory, an EPROM memory, an EEPROM memory, a register, a hard disk, a removable magnetic disk, a CD-ROM, or a storage medium of any other form in the art. For example, the storage medium may connect to a processor, so that the processor can read information from the storage medium and write information into the storage medium. Optionally, the storage medium may further be integrated into the processor. The processor and the storage medium may be disposed in an ASIC.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clear that, a person skilled in the art may make various modifications and variations to this application without departing from the scope of this application. In this way, this application is intended to cover these modifications and variations of this application provided that they fall within the scope of the claims of this application and their equivalent technologies.

## Claims

1. A service steering method, wherein the method is applied to a cloud computing system, the system comprises at least a cloud management platform node, a plurality of resource pools, and a steering node, each resource pool comprises a plurality of hosts configured to run services for a plurality of tenants, at least one instance is run on each host, an instance cluster corresponding to a target service of a target tenant is created in each resource pool, and an instance in the instance cluster is configured to run the target service; and
the method comprises:
obtaining, by the cloud management platform node, available resource information of each resource pool associated with the target service, wherein the available resource information of each resource pool indicates a quantity of instances that are of an instance cluster and that can be provided for the target service from the resource pool in a time period;
generating, by the cloud management platform node based on the available resource information of each resource pool, a steering plan of the target service in the time period; and
allocating, by the steering node, service traffic of the target service in the time period to the plurality of resource pools according to the steering plan.

2. The method according to claim 1, wherein the available resource information of each resource pool indicates a quantity of idle instances in the resource pool in the time period, and the idle instance is not occupied by another tenant in the resource pool in the time period.

3. The method according to claim 1 or 2, wherein the steering plan indicates a maximum value of service traffic that is of the target service and that can be carried in each resource pool in the time period, or a ratio of the service traffic that is of the target service and that is allocated to all the resource pools in the time period.

4. The method according to claim 3, wherein the steering plan indicates priority information of the service traffic that is of the target service and that is allocated to all the resource pools in the time period.

5. The method according to any one of claims 1 to 4, wherein the method further comprises:
Obtaining, by the cloud management platform node, resource requirement information of the target service, wherein the resource requirement information indicates a predicted service traffic value of the target service in the time period; and
the generating, by the cloud management platform node based on the available resource information of each resource pool, a steering plan of the target service in the time period comprises:
generating, by the cloud management platform node, the steering plan based on the resource requirement information and the available resource information of each resource pool.

6. The method according to claim 5, wherein a sum of the service traffic that is of the target service and that is allocated to all the resource pools in the time period is equal to the predicted service traffic value; and the service traffic that is of the target service and that is allocated to each resource pool in the time period does not exceed the maximum value of the service traffic that is of the target service and that can be carried in the resource pool.

7. The method according to claim 5 or 6, wherein the steering plan meets a cost policy, and the cost policy comprises that a fee generated by the service traffic that is of the target service and that is allocated to each resource pool in the time period is the lowest.

8. The method according to claim 7, wherein the lowest fee generated by the service traffic that is of the target service and that is allocated to each resource pool in the time period comprises an instance fee and a communication fee; and the instance fee indicates a rental fee of an instance required by the service traffic that is of the target service and that is allocated to each resource pool in the time period, and the communication fee indicates a communication fee required for transmitting the service traffic of the target service between the steering node and each resource pool.

9. The method according to any one of claims 3 to 8, wherein the maximum value of the service traffic that is of the target service and that can be carried in each resource pool is determined based on the quantity of instances that are of the instance cluster and that can be provided for the target service from the resource pool in the time period and resource conversion information of the target service, and the resource conversion information indicates a quantity of instances required for processing a single service request of the target service.

10. A service steering apparatus, wherein the apparatus comprises:
an obtaining module, configured to obtain available resource information of each resource pool associated with a target service, wherein the available resource information of each resource pool indicates a quantity of instances that are of the instance cluster and that can be provided for the target service from the resource pool in a time period; and
a determining module, configured to generate, based on the available resource information of each resource pool, a steering plan of the target service in the time period.

11. The apparatus according to claim 10, wherein the available resource information of each resource pool indicates a quantity of idle instances in the resource pool in the time period, and the idle instance is not occupied by another tenant in the resource pool in the time period.

12. The apparatus according to claim 10 or 11, wherein the steering plan indicates priority information of service traffic that is of the target service and that is allocated to all resource pools in the time period.

13. The apparatus according to any one of claims 10 to 12, wherein the obtaining module is further configured to obtain resource requirement information of the target service, wherein the resource requirement information indicates a predicted service traffic value of the target service in the time period; and
the determining module is further configured to generate the steering plan based on the resource requirement information and the available resource information of each resource pool.

14. The apparatus according to claim 13, wherein a sum of the service traffic that is of the target service and that is allocated to all the resource pools in the time period is equal to the predicted service traffic value; and the service traffic that is of the target service and that is allocated to each resource pool in the time period does not exceed a maximum value of service traffic that is of the target service and that can be carried in the resource pool.

15. The apparatus according to claim 13 or 14, wherein the steering plan meets a cost policy, and the cost policy comprises that a fee generated by the service traffic that is of the target service and that is allocated to each resource pool in the time period is the lowest.

16. The apparatus according to claim 15, wherein the lowest fee generated by the service traffic that is of the target service and that is allocated to each resource pool in the time period comprises an instance fee and a communication fee; and the instance fee indicates a rental fee of an instance required by the service traffic that is of the target service and that is allocated to each resource pool in the time period, and the communication fee indicates a communication fee required for transmitting the service traffic of the target service between a steering node and each resource pool.

17. The apparatus according to any one of claims 12 to 16, wherein the maximum value of the service traffic that is of the target service and that can be carried in each resource pool is determined based on a quantity of instances that are of the instance cluster and that can be provided for the target service from the resource pool in the time period and resource conversion information of the target service, and the resource conversion information indicates a quantity of instances required for processing a single service request of the target service.

18. A cloud computing system, wherein the system comprises at least a cloud management platform node, a plurality of resource pools, and a steering node, each resource pool comprises a plurality of hosts configured to run services for a plurality of tenants, at least one instance is run on each host, an instance cluster corresponding to a target service of a target tenant is created in each resource pool, and an instance in the instance cluster is configured to run the target service; and
the cloud management platform node is configured to: obtain available resource information of each resource pool associated with the target service, wherein the available resource information of each resource pool indicates a quantity of instances that are of the instance cluster and that can be provided for the target service from the resource pool in a time period; and generate, based on the available resource information of each resource pool, a steering plan of the target service in the time period; and
the steering node is configured to allocate the service traffic of the target service in the time period to the plurality of resource pools according to the steering plan.

19. A computing device, wherein the device comprises a processor and a memory;
the memory is configured to store computer-executable instructions; and
the processor is configured to execute the computer-executable instructions stored in the memory, to enable the computing device to perform the method according to any one of claims 1 to 9.

20. A computer-readable storage medium, wherein the computer-readable storage medium stores a program, and when the program is invoked by a processor, the method according to any one of claims 1 to 9 is performed.

21. A computer program product comprising instructions, wherein when the instructions are run on a computer device cluster, the computer device cluster is enabled to perform the method according to any one of claims 1 to 9.
